# EUROPÄISCHE PATENTANMELDUNG

(11) **EP 4 414 154 A1**
(43) Veröffentlichungstag der Anmeldung: **14.08.2024**
(21) Anmeldenummer: 24154328.9
(22) Anmeldetag: 29.01.2024
(51) Int. Cl.: B29C 49/36, B29C 49/48, B29C 49/56

(54) **BLASFORMEINHEIT FÜR EINE BLASFORMANLAGE**

(30) Priorität: 13.02.2023 DE 102023103378
(71) Anmelder: KHS GmbH, 44143 Dortmund (DE)
(72) Erfinder: Lewin, Frank, 22889 Tangstedt (DE); Klatt, Dieter, 22147 Hamburg (DE); Baumgarte, Rolf, 22926 Ahrensburg (DE)
(74) Vertreter: Andrejewski - Honke Patent- und Rechtsanwälte Partnerschaft mbB

(57) **Zusammenfassung**

Die Erfindung betrifft eine Blasformeinheit für eine Blasformanlage zum Umformen von Vorformlingen aus Kunststoff zu Behältern mit zumindest einer Blasform (1) und einer der Blasform (1) zugeordneten Blaseinrichtung, wobei die Blasform (1) zumindest aus einem ersten und einem zweiten Blasformteil (2, 3) gebildet ist, welche zwischen einer Öffnungs- und Schließstellung zueinander bewegbar sind, wobei zumindest eine Verriegelungseinrichtung (6) mit einander zusammenwirkenden Verrieglungselementen vorgesehen ist, welche die Blasformteile (2, 3) in der Schließstellung miteinander verbindet, und wobei die Blasformteile (2, 3) jeweils eine Temperiervorrichtung aufweisen. Erfindungsgemäß sind die Temperiervorrichtung und das jeweilige Verriegelungselement in einem integralen Abschnitt der Blasformteile (2, 3) angeordnet sind.

## Beschreibung

Die vorliegende Erfindung betrifft eine Blasformeinheit für eine Blasformanlage zum Umformen von Vorformlingen aus Kunststoff zu Behältern mit zumindest einer Blasform und einer der Blasform zugeordneten Blaseinrichtung, wobei die Blasform zumindest aus einem ersten und einem zweiten Blasformteil gebildet ist, welche zwischen einer Öffnungs- und Schließstellung zueinander bewegbar sind, wobei zumindest eine Verriegelungseinrichtung mit einander zusammenwirkenden Verrieglungselementen vorgesehen ist, welche die Blasformteile in der Schließstellung miteinander verbindet, und wobei die Blasformteile jeweils eine oder mehrere Temperiervorrichtungen aufweisen.

Im Besonderen bezieht sich die Erfindung auf eine Blasformanlage für die Getränkeindustrie, wobei dann aus den Vorformlingen Getränkebehälter, insbesondere Getränkeflaschen, gebildet werden. Derartige Blasformeinheiten sind üblicherweise an einem Transportkarussell angeordnet, sodass während der Rotation die Vorformlinge in die Blasformen eingesetzt werden und der Innenraum der Vorformlinge sodann mit Druckluft beansprucht wird. Durch das Einbringen eines Innendruckes werden die Wandungen der Vorformlinge nach außen gedrückt, wobei die Blasformhälften eine Blaskavität ausbilden, welche der Form der zu fertigenden Getränkeflasche entspricht. Zusätzlich kann auch eine Reckstange vorgesehen sein, welche sukzessive entlang der Behälterachse in die Blasform eingefahren wird und eine gewisse Längung der Vorformlinge ermöglicht.

Mithilfe der Temperiereinrichtungen ist es möglich, die Blasform auf eine vorbestimmte Temperatur zu erwärmen bzw. zu kühlen. Dies kann beispielsweise erforderlich sein, um ein zu schnelles Abkühlen der Vorformlinge innerhalb der Blasform zu vermeiden. Durch ein zu schnelles Abkühlen der Vorformlinge ist es einerseits schwieriger, die Vorformlinge zu formen. Gleichzeitig können sich auch Spannungen innerhalb des Materials ausbilden. Durch das Einstellen einer bestimmten Temperatur kann ein solch negatives Verhalten verhindert werden.

Die Blasform besteht üblicherweise aus zumindest zwei Blasformteilen, welche in der Praxis auch als Blasformhälften bezeichnet werden und welche zueinander bewegbar sind. Insbesondere sind im Rahmen der Erfindung Blasformhälften gemeint, welche zueinander verschwenkbar ausgebildet sind, sodass folglich die Blasformhälften auf einer Seite mit zumindest einem Scharnier miteinander verbunden sind. Zugleich ist eine Antriebsvorrichtung vorgesehen, welche die Blasformhälften nach dem Einsetzen eines Vorformlings aus einer Öffnungsstellung in die Schließstellung bewegt. Nach der Durchführung des eigentlichen Blasformvorgangs erfolgt dann über diese Antriebseinrichtung eine Bewegung der Blasformhälften in die Öffnungsstellung, sodass der fertig ausgebildete Getränkebehälter entnommen werden kann. Die Antriebseinrichtung ist hierbei üblicherweise kurvengesteuert, sodass die Position der Blasformeinheit in dem Transportkarussell und entsprechend auch die Stellung der Blasformteile zueinander winkelabhängig festgelegt ist.

Wenngleich eine solche Antriebssteuerung vergleichsweise fehlerunanfällig ist, so reichen die Kräfte der Kurvensteuerung nicht aus, um die Blasformhälften in ausreichender Art und Weise aneinander zu pressen. Hierbei ist zu bedenken, dass im Zuge des Blasformvorgangs hohe Prozesskräfte auf die Blasformteile einwirken, welche ohne Aufbringen einer entsprechenden Gegenkraft ein Auseinanderschwenken der Blasformteile bzw. eine teilweise Bewegung in einer Öffnungsstellung bewirken würden. Ein solches Auseinanderbewegen der Blasformteile hat allerdings zur Folge, dass die Getränkebehälter nur fehlerhaft und nicht in der gewünschten Form ausgebildet werden können.

Vor diesem Hintergrund ist es aus der Praxis bekannt, Verriegelungseinrichtungen vorzusehen, welche die Blasformteile in der Schließstellung miteinander verbinden. So lehrt beispielsweise die EP 3 762 209 B1 eine Ausgestaltung, bei der nach Erreichen einer Schließstellung ein Bolzenelement in axialer Richtung in Ausnehmungen des ersten und des zweiten Blasformteils hineingefahren wird, wodurch eine Schwenkbewegung verhindert wird.

Mithilfe einer solchen Verriegelungseinrichtung ist es möglich, ein Auseinanderschwenken der Blasformteile zu verhindern, wobei aber das Hereinfahren des Bolzens erst nach Erreichen der Schließstellung möglich ist, sodass ein gewisser zeitlicher Versatz zwischen dem Erreichen der Schließstellung und dem Einbringen eines Blasdruckes in die Blaskavität erforderlich ist, welcher sich auf die benötigte Produktionszeit eines Getränkebehälters, insbesondere einer Getränkeflasche, auswirkt.

Darüber hinaus hat sich in der Praxis auch gezeigt, dass das alleinige Vorsehen einer Verriegelungseinrichtung nicht ausreicht, um Getränkebehälter mit einem optisch ansprechbaren Erscheinungsbild auszuformen. Die Verriegelungseinrichtung verhindert zwar grundsätzlich ein Auseinanderschwenken der Blasformteile zueinander. Allerdings bewirkt die Verriegelungseinrichtung keine ausreichende Anpresskraft zwischen den Blasformteilen, sodass geringfügige Abstände zwischen den Blasformteilen zumindest in den die Blaskavität bildenden Abschnitten möglich sind. Dies hat zur Folge, dass die gefertigten Getränkebehälter im der Trennebene zwischen den beiden Blasformteilen eine sogenannte "parting line" ausbilden. Dies meint einen geringfügigen Materialüberschuss in der Trennlinie.

Vor diesem Hintergrund ist es bekannt, zusätzlich Zuhalteeinrichtungen vorzusehen, welche die Blasformteile im Bereich der Blaskavität aneinander drücken. Dies kann beispielsweise dadurch erreicht werden, dass die Blasformteile mehrstückig ausgebildet sind, wobei zwischen diesen einzelnen Bauteilen ein sogenanntes Druckkissen oder auch Pancake-Element angeordnet ist, welches derart gegen die Verriegelungseinrichtung arbeitet, dass eine ausreichende Anpresskraft zwischen den Blasformteilen ausgeübt wird.

Aus der EP 3 294 525 B1 sind ferner Hakenelemente bekannt, welche derart ausgeformt sind und miteinander zusammenwirken, dass nicht nur eine Verriegelung sondern gleichzeitig auch eine Zuhaltung der Blasform bewirkt wird.

Unabhängig von der konkreten Ausgestaltung ist hierbei stets die Verriegelungseinrichtung außenliegend an den sogenannten Formträgern der Blasform angeordnet, wobei die Formträger dazu vorgesehen sind, einen Formeinsatz sowie üblicherweise einen dazwischen angeordneten Formhalter aufzunehmen. Die Temperiervorrichtungen sind dann entweder am Formhalter oder an dem Formeinsatz verwirklicht. Dies hat zur Folge, dass sich eine relativ große Bauform ergibt.

Vor diesem Hintergrund liegt der Erfindung die Aufgabe zugrunde, eine Blasformeinheit sowie eine Blasformanlage mit zumindest einer solchen Blasformeinheit anzugeben, welche sich gegenüber den bislang bekannten Blasformeinheiten durch eine einfache und aus wirtschaftlicher Hinsicht kostengünstige Ausgestaltung auszeichnet.

Gegenstand und Lösung dieser Aufgabe ist eine Blasformeinheit nach Patentanspruch 1. Dementsprechend ist vorgesehen, dass die Temperiervorrichtung und das jeweilige Verriegelungselement in einem integralen Abschnitt der Blasformteile angeordnet sind. Es erfolgt somit eine Verriegelung der beiden Blasformteile miteinander in nur einem Bauteil, welches zugleich auch die Temperiervorrichtung aufweist. Hierdurch ist es möglich, den Aufbau der Blasformteile auf nur wenige Komponenten zu beschränken, wobei zugleich eine wirksame Verrieglung bewirkt werden kann.

Die Ausgestaltung der Verriegelungseinrichtung ist auf keine bestimmte Ausgestaltungsform beschränkt. Vielmehr sind grundsätzlich alle Arten von Verriegelungen denkbar, welche mit Vorteil zugleich auch eine ausreichende Anpresskraft zwischen den Blasformteilen erzeugen kann, so dass auf eine zusätzliche Zuhalteeinrichtung verzichtet werden kann.

Besonders bevorzugt ist in diesem Zusammenhang eine Ausgestaltung, bei der die Verriegelungseinrichtung als Bolzenspannsystem ausgebildet ist, wobei ein erstes Verriegelungselement als Spannbolzen und ein zweites Verriegelungselement als stellbares Spannfutter ausgebildet ist.

Derartige Bolzenspannsysteme sind grundsätzlich aus dem Stand der Technik bekannt und werden üblicherweise im Bereich der Bearbeitungstechnik eingesetzt, um beispielsweise verschiedene spanabhebende Werkzeuge, z. B. Fräser oder Bohrer, schnell und zuverlässig an einer Werkzeugmaschine befestigen zu können. Darüber hinaus werden sie auch als sogenannte Palettenspannsysteme eingesetzt, um beispielsweise zu bearbeitende Werkstücke oder Bauteile innerhalb einer Bearbeitungsanlage festlegen zu können. Da gerade in diesem Bereich eine exakte Positionierung notwendig ist, ermöglichen derartige Bolzenspannsysteme ein möglichst spielfreies Einspannen, sodass eine Festlegung in alle drei Raumachsen möglich ist. Entsprechend ist auch von sogenannten Nullpunktspannsystemen die Rede.

Derartige Bolzenspannsysteme arbeiten hierbei stets in einer ähnlichen Art und Weise, wobei zum Verriegeln der Spannbolzen in das Spannfutter eingeführt und sodann innerhalb des Spannfutters gehalten wird. Zugleich wird auch eine gewisse Spannkraft auf den Spannbolzen ausgeübt. Das Halten des Spannbolzens innerhalb des Spannfutters kann üblicherweise über sogenannte Spannelemente erfolgen, welche formschlüssig und/oder kraftschlüssig an dem Spannbolzen anliegen bzw. diesen hintergreifen und eine Bewegung in axialer Richtung bezogen auf das Spannfutter verhindern.

Die Spannelemente können kugelförmig ausgebildet sein, wobei Federelemente die Spannelemente radial nach innen drücken. Erreicht der Spannbolzen in der Schließstellung eine gewisse Stellung innerhalb des Spannfutters werden die Spannelemente, insbesondere die Kugeln, radial nach innen gedrückt und liegen in einem insbesondere konischen Bereich des Spannbolzens an. Eine Entnahme des Spannbolzens ist dann nicht mehr möglich. Alternativ kann anstelle von Federelementen auch ein Pneumatik-, ein Hydraulik- oder ein Elektroantrieb vorgesehen sein, welcher über eine entsprechende Ausgestaltung die Spannelemente radial nach innen drückt. In analoger Art und Weise kann auch ein Entriegeln des Spannbolzens erfolgen.

Derartige Bolzenspannsysteme werden nun erfindungsgemäß dafür genutzt, um die Blasformteile miteinander zu verbinden. Dies ist insbesondere deshalb von Vorteil, da der Spannbolzen allein durch Bewegung der Blasformteile zueinander in das zugeordnete Spannfutter eingeführt werden kann, wobei lediglich in der Schließstellung eine Festlegung des Spannbolzens in dem Spannfutter, z. B. durch die Spannelemente, erfolgt. Entsprechend ist es nicht notwendig, nach Erreichen der Schließstellung ein separates Bauteil einzuführen oder einzuschwenken, welches die Blasformteile miteinander verbindet, wobei diese Bewegung eine entsprechende Zeitdauer benötigt, welche nicht für die Produktion von Getränkebehälter zur Verfügung steht. Mit Hilfe eines Bolzenspannsystems können die Blasformhälften auch exakt zueinander positioniert bzw. zueinander zentriert werden.

Darüber hinaus ist es gemäß einer bevorzugten Ausgestaltung auch vorgesehen, dass die zumindest eine Verriegelungseinrichtung jeweils eine Spannkraft zwischen 10 und 50 kN erzeugt. Je nach Zahl der verwendeten Verriegelungseinrichtungen kann dann zwischen den Blasformteilen insgesamt eine Anpresskraft von 60 bis 135 kN erzeugt werden, welche ausreichend ist, um auf eine zusätzliche Zuhalteeinrichtung zu verzichten.

Bevorzugt weisen die Blasformteile in der Verriegelungsstellung einander zugewandte Anlageflächen auf, wobei die zuvor genannte Anpresskraft zwischen den Anlageflächen erzeugt wird.

Durch die hohe Anpresskraft bewirkt die Verriegelungseinrichtung nicht nur eine Festlegung der Blasformteile zueinander, sondern erzeugt zugleich auch eine Spannkraft, welche wiederum einen ausreichende Anpresskraft der die Blaskavität bildenden Abschnitte bewirkt. Eine besonders bevorzugte Ausgestaltung sieht daher vor, dass die Anpresskraft ausschließlich durch die Verriegelungseinrichtung erzeugt wird.

Gemäß einer bevorzugten Ausgestaltung der Erfindung greift der Spannbolzen im Zuge einer zwischen der Öffnungs- und der Schließstellung verlaufenden Schließbewegung in das Spannfutter ein. Hieraus wird deutlich, dass die zur Verriegelung erforderliche Bewegung des Spannbolzens und des Spannfutters zueinander allein aufgrund der Bewegung der Blasformhälften bewirkt wird. Eine separate Bewegung z. B. in Form eines verschwenkbaren Verriegelungshakens oder eines Bolzenelementes entlang einer Axialrichtung der Blasformeinheit ist somit nicht erforderlich.

Eine Weiterbildung der Erfindung sieht vor, dass der Spannbolzen an dem ersten und das Spannfutter an dem zweiten Blasformteil angeordnet sind. Entsprechend erfolgt also eine unmittelbare Zuordnung der einzelnen Bauteile des Bolzenspannsystems an die jeweiligen Blasformteile. In diesem Zusammenhang ist anzumerken, dass im Rahmen der Erfindung jede Verriegelungseinrichtung bevorzugt ausschließlich aus dem Spannbolzen und dem Spannfutter gebildet ist. Sofern also folglich von einem Zusammenhang zwischen einem Blasformteil und der Verriegelungseinrichtung die Rede ist, so bezieht sich dies hinsichtlich des ersten Blasformteils auf den Spannbolzen und beim zweiten Blasformteil auf das Spannfutter.

Gemäß einer Weiterbildung der Erfindung stehen die Spannbolzen gegenüber der Anlagefläche des ersten Blasformteils vor und das Spannfutter ist in einem Rücksprung der Anlagefläche des zweiten Blasformteils angeordnet. Ein Vorstehen des Spannbolzens ist erforderlich, um in geeigneter Art und Weise in das Spannfutter eingeführt werden zu können. Bevorzugt ist hierbei nicht nur das Spannfutter sondern auch der Spannbolzen an der jeweiligen Anlagefläche angeordnet. Da das Spannfutter ausschließlich für eine Aufnahme des Spannbolzens erforderlich ist, ist es sinnvoll, dieses in einem Rücksprung einzusetzen, damit ein Anliegen der beiden Anlageflächen der Blasformteile aneinander ermöglicht werden kann. Der Rücksprung richtet sich in seiner Tiefe im Wesentlichen nach der erforderlichen Bautiefe für das Spannfutter. Insofern wird eine Ausgestaltung angestrebt, bei der das Spannfutter bündig mit der Anlagefläche der zweiten Blasformhälfte angeordnet ist. Alternativ kann der Spannbolzen auch im geöffneten Zustand zurückgezogen angeordnet sein.

Gemäß einer bevorzugten Ausgestaltung der Erfindung bilden die Blasformteile in der Verriegelungsstellung eine Blaskavität aus. Wie bereits zuvor erläutert, handelt es sich bei der Blaskavität um einen Hohlraum, welche entsprechend der gewünschten Behälterform ausgebildet ist. Die zumindest eine Verriegelungseinrichtung ist bevorzugt auf einer ersten Seite der Blaskavität angeordnet. Entsprechend sind der Spannbolzen auf der ersten Seite des ersten Blasteils und das Spannfutter auf der ersten Seite des zweiten Blasteils angeordnet. Mit der ersten Seite ist bevorzugt die Seite der Blaskavität gemeint, in dessen Bereich die Blasformteile auseinandergeschwenkt werden und über die das Einsetzen und des Vorformlings und die Entnahme des Getränkebehälter vorgesehen ist. Die erste Seite ist demnach bevorzugt gegenüberliegend von einer zweiten Seite angeordnet, wobei die Blasformteile an der zweiten Seite über eine Scharniereinrichtung miteinander verbunden sind. In der Schließstellung erfolgt demnach ein Verbinden der Blasformteile an der ersten Seite über die zumindest eine Verriegelungseinrichtung und an der zumindest zweiten Seite bevorzugt über die Scharniereinrichtung.

Eine Weiterbildung sieht jedoch vor, dass auch auf einer zweiten Seite der Blaskavität zumindest eine Verriegelungseinrichtung angeordnet ist. Auch bei dieser zusätzlichen Verriegelungseinrichtung handelt es sich bevorzugt um ein Bolzenspannsystem mit Spannbolzen und Spannfutter, wobei die Verriegelungseinrichtung auf der zweiten Seite der Blaskavität analog zu den zuvor beschriebenen Verriegelungseinrichtungen auf der ersten Seite der Blaskavität ausgebildet sein kann. Eine Anordnung von Verriegelungseinrichtungen auf beiden Seiten der Blaskavität hat den Vorteil, dass über die Scharniereinrichtung keine Prozesskräfte aufgenommen werden müssen. Dieses ist insbesondere dann sinnvoll, wenn über die Verriegelungseinrichtungen nicht nur eine Verriegelung sondern auch eine Zuhaltung der Blasform bewirkt werden soll. Die Scharniereinrichtung ist dann lediglich für die Schließbewegung bzw. für die Öffnungsbewegung zuständig, während nach Erreichen der Schließstellung ausschließlich über die Verriegelungseinrichtung ein Zuhalten der Blasform bewirkt wird.

Eine besonders bevorzugte Weiterbildung der Erfindung sieht ferner vor, dass mehrere Verriegelungseinrichtungen in vertikaler Richtung untereinander angeordnet sind. Demnach ist vorgesehen, dass die Blasform zumindest zwei in vertikaler Richtung untereinander angeordnete Verriegelungseinrichtungen aufweist, welche in der Schließstellung die beiden Blasformteile miteinander verbinden. Sofern auf beiden Seiten der Blaskavität Verriegelungseinrichtungen vorgesehen sind, sind bevorzugt insgesamt vier Verriegelungseinrichtungen vorgesehen, wobei jeweils zwei Verriegelungseinrichtungen auf jeder Seite untereinander angeordnet sind. Eine besonders bevorzugte Ausgestaltung sieht vor, dass zumindest drei Verriegelungseinrichtungen auf einer Seite der Blaskavität oder jeweils auf einer Seite der Blaskavität untereinander angeordnet sind.

Durch die erfindungsgemäße Ausgestaltung der Erfindung ist es nunmehr möglich, die Blasformteile in unterschiedliche Art und Weise auszubilden. Eine erste Ausgestaltung sieht hierbei vor, dass die Blasformteile jeweils integral ausgebildet sind. Mit einer integralen Ausgestaltung ist gemeint, dass die Blasformteile einstückig ausgebildet sind, wobei selbstverständlich die Verriegelungseinrichtungen bzw. der Spannbolzen und das Spannfutter nicht als Teil des Blasformteils zu verstehen sind. Vielmehr handelt es sich um separate Bauteile, welche dann mit dem jeweiligen Blasformteil verbunden bzw. mit diesem ausgebildet werden.

Eine einstückige Ausgestaltung wird hierbei dadurch ermöglicht, dass - wie zuvor erläutert - mithilfe der zumindest einen Verriegelungseinrichtung auch eine ausreichender Anpresskraft erzeugt werden kann. Insofern ist es nicht notwendig, weitere Bauteile, z.B. Druckkissen, vorzusehen, welche innerhalb des jeweiligen Blasformteils eine Anpresskraft zwischen den die Blaskavität bildenden Bauteilen ausübt. Im Zuge eines Formatwechsels ist es erforderlich, die gesamten Blasformteile auszuwechseln, da die Blasformteile mit einer der Behälterform entsprechenden Ausformung ausgebildet sind.

Selbstverständlich ist es im Rahmen der Erfindung aber auch möglich, dass die Blasformteile jeweils aus einem Formträger und einem in dem Formträger angeordneten und in der Verriegelungsstellung die Blaskavität bildenden Formeinsatz ausgebildet sind. Gemäß einer solchen Ausgestaltung ist also nunmehr weiterhin eine mehrstückige Ausgestaltung des Blasformteils vorgesehen, wobei auch bei einer solchen Ausgestaltung auf eine Zuhalteeinrichtung, z. B. in Form eines Druckkissens, verzichtet werden kann. Demnach bleibt der Formträger stets innerhalb der Blaseinheit, wobei lediglich eine Auswechslung der Formateinsätze erfolgt.

Bei der Temperiervorrichtung handelt es sich insbesondere um Fluidkanäle, welche in der jeweiligen Blasformhälfte angeordnet sind, wobei ein Temperiermedium die Fluidkanäle durchströmt und im Zuge dessen temperiert. Entsprechend sind ein Einlauf und ein Auslauf an jedem Blasformteil vorgesehen.

Bevorzugt sieht die Erfindung bevorzugt vor, dass die Temperiereinrichtung und die Verriegelungseinrichtung jeweils in dem Formträger angeordnet sind. Entsprechend erfolgt bei einer mehrstückigen Ausgestaltung der Blasformhälfte die Anordnung der Verriegelungseinrichtung bzw. des Spannfutters und des Spannbolzens gemeinsam in dem Formträger.

Eine bevorzugte Ausgestaltung der Erfindung sieht ferner vor, dass die Entriegelung der Verriegelungseinrichtung elektrisch, pneumatisch oder mechanisch erfolgt. Insbesondere ist vorgesehen eine kurvengesteuerte Entriegelung vorzusehen. Unabhängig von der Art der Entriegelung erfolgt bevorzugt eine Entlastung eines in dem Spannfutter angeordneten Federelementes, sodass der jeweilige Spannbolzen freigegeben wird.

Eine Weiterbildung der Erfindung sieht ferner zumindest ein drittes Blasformteil zur Bildung der Blaskavität in der Verriegelungsstellung vor. Hierbei handelt es sich bevorzugt um ein Blasformteil, welches den Bodenbereich der Blaskavität bildet. Die Schwenkachse ist somit bevorzugt senkrecht zu der Schwenkachse des ersten und des zweiten Blasformteils angeordnet.

Die Verriegelung und die Zuhaltung kann grundsätzlich unabhängig von der des ersten und des zweiten Blasformteils ausgebildet sein. Insbesondere ist allerdings vorgesehen, dass zumindest eine Bodenverriegelungseinrichtung als Bolzenspannsystem mit Spannbolzen und einem in einer Verriegelungstellung stellbaren Spannfutter vorgesehen ist, welche das dritte Blasformteil in der Schließstellung mit dem ersten und dem zweiten Blasformteil verbindet. Entsprechend erfolgt eine Verbindung und bevorzugt auch ein Zuhalten in analoger Art und Weise, wie dies zwischen dem ersten und dem zweiten Blasformteil der Fall ist.

Gemäß einer bevorzugten Ausgestaltung sind bevorzugt zumindest zwei Bodenverriegelungseinrichtungen vorgesehen, wobei dann jeweils ein Spannbolzen der ersten und der zweiten Bodenverriegelungseinrichtung an dem dritten Blasformteil angeordnet ist. Das Spannfutter der ersten Bodenverriegelungseinrichtung ist dann an dem ersten und das Spannfutter der zweiten Bodenverriegelungseinrichtung an dem zweiten Blasformteil angeordnet.

Gegenstand der Erfindung ist ferner eine Blasformanlage mit zumindest einer erfindungsgemäßen Blasformeinheit, wobei die zumindest eine Blasformeinheit an einem rotierbar angetriebenen Träger angeordnet ist. Gemäß einer bevorzugten Ausgestaltung ist eine Vielzahl von erfindungsgemäßen Blasformeinheiten vorgesehen, welche in Umfangsrichtung hintereinander an den rotierbar angetriebenen Träger angeordnet sind.

Ausgehend von einer solchen Ausgestaltung ist bevorzugt vorgesehen, dass eine Antriebsvorrichtung vorgesehen ist, welche eine Schließbewegung und eine Öffnungsbewegung zwischen den Blasformteilen bewirkt. Die Antriebseinrichtung ist darüber hinaus bevorzugt eine kurvengesteuerte Antriebseinrichtung. Entsprechend wird die Bewegung allein aufgrund der Rotation der Blasformeinheiten an dem rotierbar angetriebenen Träger bewirkt.

Im Folgenden wird die Erfindung anhand eines Ausführungsbeispiels näher erläutert. Es zeigen:
- Fig. 1: eine isometrische Darstellung einer erfindungsgemäßen Blasform in einer einstückigen Ausbildung
- Fig. 2: eine Schnittdarstellung der Blasform gemäß Fig. 1
- Fig. 3: eine isometrische Darstellung einer alternativen Ausgestaltungsform einer Blasform gemäß der Fig. 1
- Fig. 4: eine Schnittdarstellung der Blasform gemäß der Fig. 3
- Fig. 5, 6: isometrische Darstellungen einer erfindungsgemäßen Blasform mit einer mehrstufigen Ausgestaltung
- Fig. 7: eine Schnittdarstellung der Blasform gemäß den Figuren 5, 6.

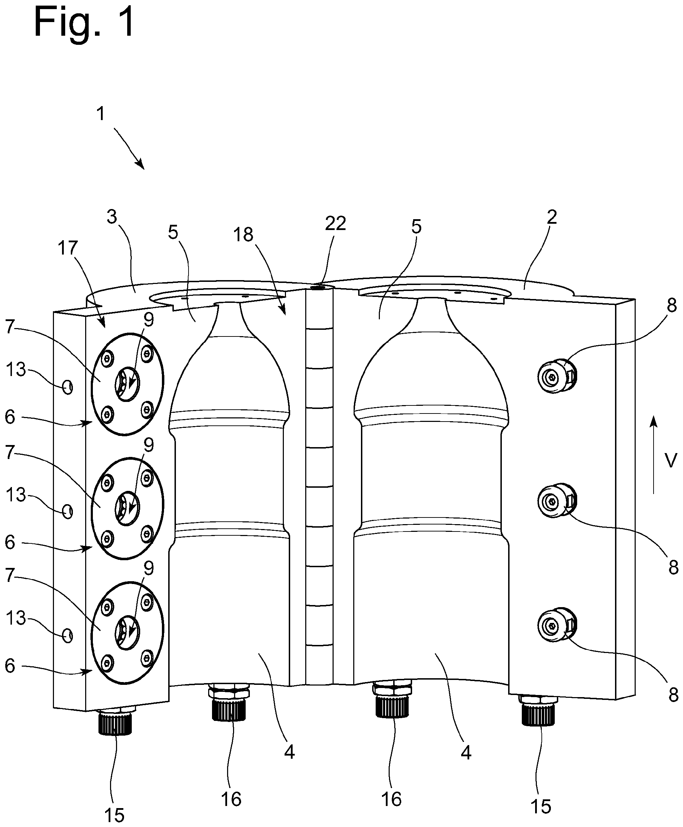

Die Fig. 1 zeigt eine Blasform 1, welche Teil einer Blasformeinheit für eine Blasformanlage zum Umformen von Vorformlingen aus Kunststoff zu Getränkebehältern ist. Bei den Behältern handelt es sich insbesondere um Getränkeflaschen aus Kunststoff, insbesondere aus Polyethylenterephthalat (PET), sodass sich entsprechend auf eine Blasform 1 aus dem Bereich der Getränkeindustrie bezogen wird.

In vertikaler Richtung V oberhalb der Blasform 1 ist eine nicht näher dargestellte und der Blasform 1 zugeordnete Blaseinrichtung vorgesehen, wobei zunächst ein Vorformling in die Blasform 1 eingesetzt und sodann über die Blaseinrichtung mit einem Innendruck beaufschlagt wird, wodurch der Vorformling an eine Blaskavität gedrückt wird, welche der Form der zu fertigenden Getränkeflasche entspricht.

Zur Ausbildung einer entsprechenden Blaskavität weist die Blasform 1 zwei Blasformteile 2, 3 auf, welche jeweils eine entsprechende Ausformung 4 aufweisen und wobei diese Ausformungen 4 in der Schließstellung der Blasform 1 die Blaskavität ausbilden.

Die gesamte Blasformeinheit ist üblicherweise an einem ebenfalls nicht näher dargestellten rotierbaren Träger angeordnet, sodass die Umformung der Vorformlinge zu Getränkebehältern während eines rotativen Transports an dem Träger erfolgt. Hierzu ist es erforderlich, dass die Blasformteile 2, 3 an definierten Winkelpositionen zueinander- oder auseinanderschwenken. Hierbei erfolgt das Einbringen der Vorformlinge in einer in der Fig. 1 gezeigten Öffnungsstellung, in der die Blasformteile 2, 3 über eine die Blasformteile 2, 3 schwenkbar verbindende Scharniereinrichtung 22 auseinander geschwenkt sind.

Nach Einbringen der Vorformlinge erfolgt dann ein Verschwenken derart, dass die Blasformteile 2, 3 zueinander bewegt werden und über eine Anlagefläche 5 aneinander liegen. Diese Anlagefläche 5 definiert eine Trennebene zwischen den Blasformteilen 2, 3 in der diese über eine ausreichend große Anpresskraft miteinander verpresst werden müssen, damit entlang dieser Trennebene eine möglichst saubere Umformung der Vorformlinge erfolgen kann, ohne dass sich eine sogenannte "parting line" ausbildet.

Nach dem Umformen zu Getränkebehältern erfolgt dann erneut ein Verschwenken der Blasformteile 2, 3 in eine Öffnungsstellung, sodass der fertig ausgebildete Getränkebehälter bzw. die fertig ausgebildete Getränkeflasche entnommen werden kann.

Während des Umformens werden die Vorformlinge mit Druckluft beaufschlagt, sodass große Prozesskräfte über die Ausformung 4 auf die Blasformteile 2, 3 einwirken, welche es erfordern, dass die Blasformteile 2, 3 in der Schließstellung in ausreichender Art und Weise zueinander festgelegt sind.

Hierzu weist die Blasform 1 insgesamt drei in vertikaler Richtung v untereinander angeordnete Verriegelungseinrichtungen 6 auf, welche jeweils aus einem Spannfutter 7 und einem dem Spannfutter 7 zugeordneten Spannbolzen 8 ausgebildet sind.

Entsprechend handelt es sich bei den Verriegelungseinrichtungen 6 um sogenannte Bolzenspannsysteme, wobei der Spannbolzen 8 im Zuge einer Bewegung der Blasformteile 2, 3 von einer Öffnungsstellung in die Schließstellung in eine Öffnung 9 des Spannfutters 7 eingeführt und innerhalb des Spannfutters 7 gehalten wird.

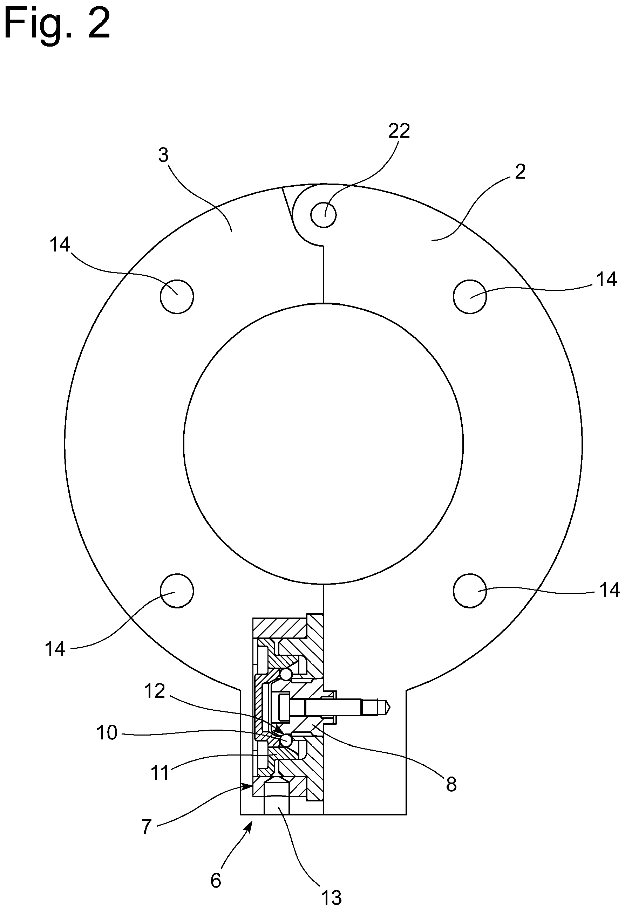

Die genaue Funktionsweise kann der Fig. 2 entnommen werden. Es handelt sich um ein Bolzenspannsystem, welches in der Praxis auch als Nullpunktspanner bezeichnet wird und insbesondere im Bereich der Werkzeugtechnik zum Einsatz kommt, um entweder spanabhebende Werkzeuge oder aber auch zu bearbeitende Werkstücke innerhalb einer Bearbeitungsanlage anordnen zu können.

Das Spannfutter 7 weist mehrere Spannelemente 10 auf, wobei es sich bei dem in der Fig. 2 gezeigten Spannelementen 10 um Kugeln handelt, welche über eine Schieberhülse11 in Bezug auf den Spannbolzen 8 in der Schließstellung radial nach innen gedrückt werden. Der Spannbolzen 8 weist wiederum einen konischen Abschnitt 12 auf, sodass die Spannelemente 10 den Spannbolzen 8 abschnittsweise hintergreifen, um diesen formschlüssig zu halten und eine Entnahme des Spannbolzens 8 zu verhindern. Zugleich erzeugen die Spannelemente 10 auch eine gewisse Spannkraft auf den Spannbolzen 8, sodass die Verschließeinrichtungen 6 nicht nur eine Verriegelung sondern zugleich auch eine Anpresskraft zwischen den Blasformteilen 2, 3 erzeugen.

Die Schieberhülse 11 wird üblicherweise über nicht näher dargestellte Federelemente in der Verriegelungsstellung gemäß der Fig. 2 gehalten. Durch Aufbringen eines Pneumatikdruckes über eine Queröffnung 13 ist es möglich die Schieberhülse 11 zurückzubewegen, da die Spannelemente 10 und folglich auch der Spannbolzen 8 freigegeben werden und die Blasform 1 geöffnet werden kann. Alternativ ist es auch möglich ein Werkzeug in die Queröffnung 13 einzusetzen, welches eine Entlastung der nicht dargestellten Federelemente bewirkt.

Der besondere Vorteil derartiger Verriegelungseinrichtungen 7 besteht darin, dass je nach Ausgestaltung der Verriegelungseinrichtungen 7 sowie der konkreten Anzahl ein ausreichend große Anpresskraft zwischen den Blasformteilen 2, 3 erzeugt werden kann, sodass auf eine zusätzliche Zuhalteeinrichtung verzichtet werden kann. Die Verriegelungseinrichtungen 7 dienen also nicht nur dazu, die beiden Blasformteile 2, 3 miteinander zu verbinden. Vielmehr wird in einfacher und zuverlässiger Art und Weise auch eine Zuhaltung bewirkt, welche bei vergleichbaren Lösungen aus dem Stand der Technik nicht ohne weiteres umgesetzt werden kann. Insbesondere ist üblicherweise eine Verriegelungseinrichtung 6 und zugleich eine Zuhalteeinrichtung z. B. in Form eines Druckkissens vorgesehen, wobei die Verriegelungseinrichtung 6 lediglich die beiden Blasformteile 2, 3 zueinander festlegt und die Zuhalteeinrichtung davon ausgehend die Anpresskraft erzeugt. Dies setzt stets eine mehrteilige Ausgestaltung der Blasform 1 voraus.

Im Gegensatz dazu zeigen die Figuren 1 und 2, dass die Blasformteile 2, 3 einstückig ausgebildet sein können. Gemäß einer solchen Ausgestaltung ist dann auch vorgesehen, dass eine Temperiervorrichtung vorgesehen ist, wobei diese Temperiervorrichtung jeweils Fluidkanäle 14 aufweist, welche jeweils in den Blasformteilen 2, 3 angeordnet sind und jeweils mit einem Einlauf 15 und mit einem Auslauf 16 derart betrieben werden, dass ein temperiertes Fluid durch die Fluidkanäle 14 geleitet wird, so dass die Blasformteile 2, 3 insbesondere in den die Blaskavität bildenden Bereichen auf eine vorbestimmte Temperatur geheizt bzw. gekühlt werden können. Die Fluidkanäle 14 bzw. die Temperiervorrichtung sind dann jeweils in einem integralen Abschnitt der Blasformteile 2, 3 angeordnet, in dem auch die Verriegelungseinrichtung 6 bzw. das Spannfutter 7 oder der Spannbolzen 8 angeordnet ist.

Gemäß der Ausgestaltung der Blasform 1 gemäß den Figuren 1, 2 sind die Verriegelungseinrichtungen 6 jeweils auf einer ersten Seite 17 der Blaskavität bzw. der Ausformungen 4 angeordnet, während auf der zweiten Seite 18 lediglich die Scharniereinrichtung 22 angeordnet ist.

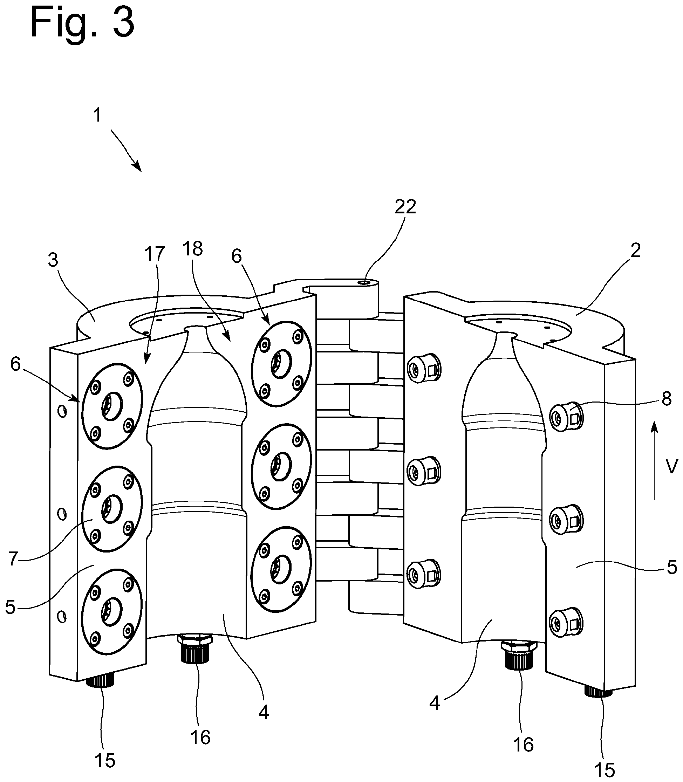

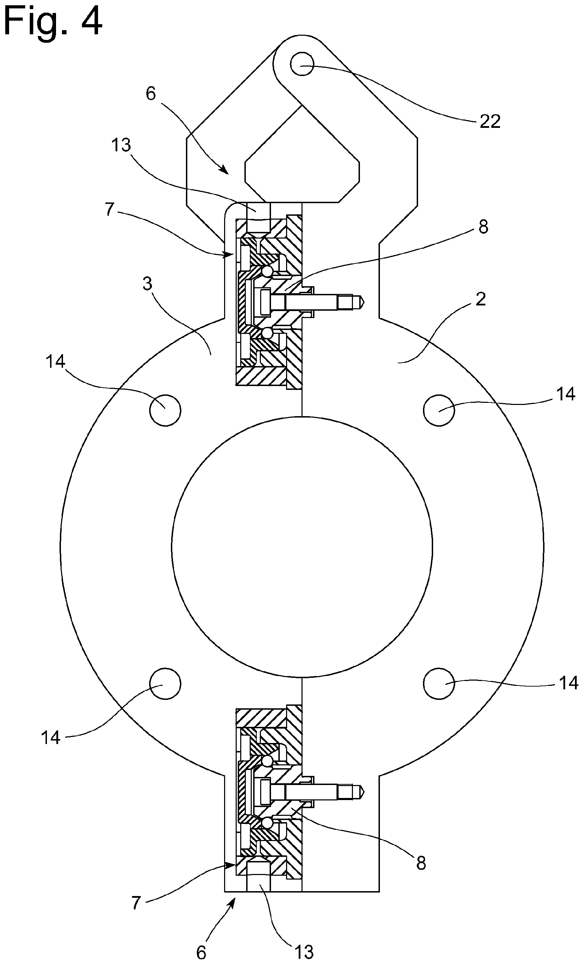

Gemäß der Ausgestaltung der Figuren 3 und 4 befinden sich sowohl auf der ersten also auf der zweiten Seite 17, 18 entsprechende Verschließeinrichtungen 6, sodass die Scharniereinrichtung 22 nicht dafür ausgebildet sein muss, die Prozesskräfte während des Blasformens aufzunehmen. Ansonsten entspricht die Blasform 1 gemäß der Figuren 3 und 4 im Wesentlichen der der Figuren 1 und 2, wobei es sich in beiden Fällen um eine einstückige Ausgestaltung handelt.

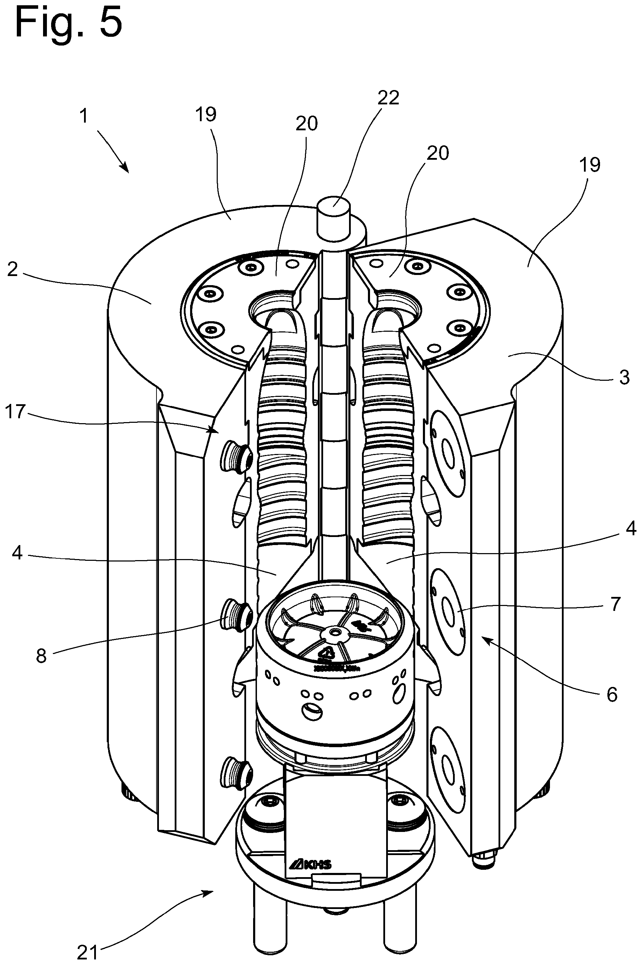

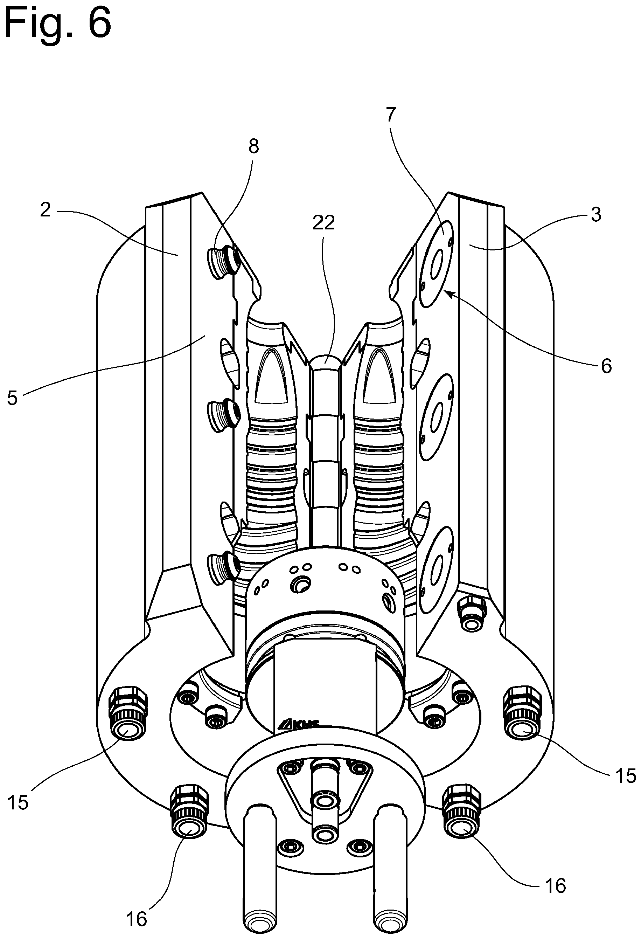

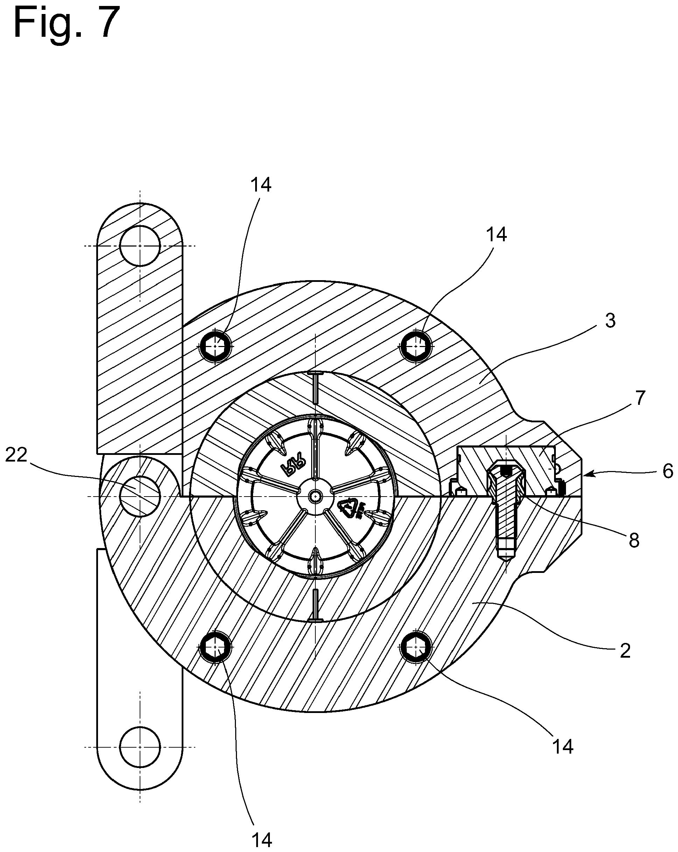

Die Figuren 5 und 6 zeigen nunmehr eine mehrteilige Ausgestaltung einer der Blasformteile 2, 3. Hierbei verfügen die Blasformteile 2, 3 jeweils über einen Formatträger 19 sowie einem Formeinsatz 20, welcher dann die für die Blaskavität erforderlichen Ausformungen 4 aufweist. Die Temperiervorrichtung bzw. die Fluidkanäle 14 sind zusammen mit den Verriegelungseinrichtungen 6 am Formatträger 19 vorgesehen. Dies ist insbesondere der Fig. 7 deutlich zu entnehmen. Darüber hinaus ergibt sich eine ähnliche Ausgestaltung zu den Figuren 1 bis 4. Die Verriegelungseinrichtungen 6 mit dem Spannfutter 7 und dem Spannbolzen 8 sind lediglich auf der ersten Seite 17 der Blaskavität angeordnet.

Den Figuren 5 und 6 kann darüber hinaus auch ein drittes Blasformteil 21 entnommen werden, welches für die Ausbildung des Bodens der Getränkeflasche vorgesehen ist und welches in der dargestellten Ausführungsform ebenfalls zwischen dem ersten und dem zweiten Blasformteil 2, 3 gehalten wird.

Denkbar ist in diesem Zusammenhang allerdings auch, dass das dritte Blasformteil 21 über eine ebenfalls als Bolzenspannsystem ausgebildete Bodenverriegelungseinrichtung mit dem ersten und dem zweiten Blasformteil 2, 3 verbunden wird.

### Bezugszeichenliste:

- 1: Blasform
- 2: erstes Blasformteil
- 3: zweites Blasformteil
- 4: Ausformung
- 5: Anlagefläche
- 6: Verriegelungseinrichtung
- 7: Spannfutter
- 8: Spannbolzen
- 9: Öffnung
- 10: Spannelemente
- 11: Schieberhülse
- 12: konischer Abschnitt des Spannbolzens
- 13: Queröffnung
- 14: Fluidkanäle der Temperiervorrichtung
- 15: Einlauf
- 16: Auslauf
- 17: erste Seite
- 18: zweite Seite
- 19: Formträger
- 20: Formeinsatz
- 21: drittes Blasformteil
- 22: Scharniereinrichtung
- V: vertikale Richtung

## Patentansprüche

1. Blasformeinheit für eine Blasformanlage zum Umformen von Vorformlingen aus Kunststoff zu Behältern mit zumindest einer Blasform (1) und einer der Blasform (1) zugeordneten Blaseinrichtung, wobei die Blasform (1) zumindest aus einem ersten und einem zweiten Blasformteil (2, 3) gebildet ist, welche zwischen einer Öffnungs- und Schließstellung zueinander bewegbar sind, wobei zumindest eine Verriegelungseinrichtung (6) mit einander zusammenwirkenden Verrieglungselementen vorgesehen ist, welche die Blasformteile (2, 3) in der Schließstellung miteinander verbindet, und wobei die Blasformteile (2, 3) jeweils eine oder mehrere Temperiervorrichtungen aufweisen,
**dadurch gekennzeichnet, dass**
die Temperiervorrichtungen und das jeweilige Verriegelungselement in einem integralen Abschnitt der Blasformteile (2, 3) angeordnet sind.

2. Blasformeinheit nach Anspruch 1, **dadurch gekennzeichnet, dass** die zumindest eine Verriegelungseinrichtung (6) als Bolzenspannsystem ausgebildet ist, wobei ein erstes Verriegelungselement als Spannbolzen (8) und ein zweites Verriegelungselement als stellbares Spannfutter (7) ausgebildet ist.

3. Blasformeinheit nach einem der vorangegangenen Ansprüche, **dadurch gekennzeichnet, dass** die Blasformteile (2, 3) in der Verriegelungsstellung einander zugewandte Anlageflächen (5) aufweisen.

4. Blasformeinheit nach Anspruch 3, **dadurch gekennzeichnet, dass** die zumindest eine Verriegelungseinrichtung (6) dazu eingerichtet ist, eine Anpresskraft zwischen den Anlageflächen (5) zu erzeugen, welche mehr als 60 kN beträgt.

5. Blasformeinheit nach Anspruch 3 oder 4, **dadurch gekennzeichnet, dass** die Anpresskraft ausschließlich durch die Verriegelungseinrichtung (6) erzeugt wird.

6. Blasformeinheit nach einem der Ansprüche 3 bis 5, **dadurch gekennzeichnet, dass** der Spannbolzen (8) an dem ersten Blasformteil (2) angeordnet ist und gegenüber dessen Anlagefläche (5) vorsteht und wobei das Spannfutter (7) in einem Rücksprung der Anlagefläche (5) des zweiten Blasformteils (3) angeordnet ist.

7. Blasformeinheit nach einem der vorangegangenen Ansprüche, **dadurch gekennzeichnet, dass** die Blasformteile (2, 3) in der Verriegelungsstellung eine Blaskavität ausbilden, wobei die zumindest eine Verriegelungseinrichtung (6) auf einer ersten Seite (17) der Blaskavität angeordnet ist.

8. Blasformeinheit nach Anspruch 7, **dadurch gekennzeichnet, dass** zusätzlich zumindest eine weitere Verriegelungseinrichtung (6) auf einer zweiten Seite (18) der Blaskavität angeordnet ist.

9. Blasformeinheit nach einem der vorangegangenen Ansprüche, dass mehrere Verriegelungseinrichtungen (6) in vertikaler Richtung (V) untereinander angeordnet sind.

10. Blasformeinheit nach einem der vorangegangenen Ansprüche, **dadurch gekennzeichnet, dass** die Blasformteile (2, 3) jeweils integral ausgebildet sind.

11. Blasformeinheit nach einem der Ansprüche 1 bis 9, **dadurch gekennzeichnet, dass** die Blasformteile (2, 3) jeweils aus einem Formträger (19) und einem in dem Formträger (19) angeordneten und in der Verriegelungsstellung die Blaskavität bildenden Formeinsatz (20) ausgebildet sind.

12. Blasformeinheit nach Anspruch 11, **dadurch gekennzeichnet, dass** die Temperiereinrichtung und die Verriegelungseinrichtung (19) jeweils in dem Formträger angeordnet sind.

13. Blasformeinheit nach einem der vorangegangenen Ansprüche, **dadurch gekennzeichnet, dass** die Entriegelung oder Verriegelung der Verriegelungseinrichtung (6) elektrisch, pneumatisch oder mechanisch erfolgt.

14. Blasformeinheit nach einem der vorangegangenen Ansprüche, **dadurch gekennzeichnet, dass** zumindest ein drittes Blasformteil (21) zur Bildung der Blaskavität in der Verriegelungsstellung vorgesehen ist.

15. Blasformeinheit nach Anspruch 14, **dadurch gekennzeichnet, dass** zumindest eine Bodenverriegelungseinrichtung als Bolzenspannsystem mit Spannbolzen (8) und einem in eine Verriegelungsstellung stellbaren Spannfutter (7) vorgesehen ist, welche das dritte Blasformteil (21) in der Schließstellung mit dem ersten und dem zweiten Blasformteil (2, 3) verbindet.

16. Blasformanlage mit zumindest einer Blasformeinheit nach einem der vorangegangenen Ansprüche, wobei die zumindest eine Blasformeinheit an einem rotierbar angetrieben Träger angeordnet ist.
